(19)

**Europäisches Patentamt**
**European Patent Office**
**Office européen des brevets**

(11)  **EP 4 632 616 A1**

(12) **EUROPEAN PATENT APPLICATION**

(43) Date of publication:
**15.10.2025  Bulletin 2025/42**

(21) Application number: **24210020.4**

(22) Date of filing: **04.04.2024**

(51) International Patent Classification (IPC):
$G06F\ 30/17^{(2020.01)}$     $G06N\ 5/01^{(2023.01)}$
$G06F\ 111/06^{(2020.01)}$

(52) Cooperative Patent Classification (CPC):
**G06F 30/17; G06N 5/01;** G06F 2111/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(62) Document number(s) of the earlier application(s) in
accordance with Art. 76 EPC:
**24305527.4 / 4 629 123**

(71) Applicant: **Dassault Systèmes**
**78140 Vélizy-Villacoublay (FR)**

(72) Inventors:
 • **MEHR, Eloi**
  **78140 Vélizy-Villacoublay (FR)**
 • **BRUS, Mathieu**
  **78140 Vélizy-Villacoublay (FR)**

(74) Representative: **Bandpay & Greuter**
 **11 rue Christophe Colomb**
 **75008 Paris (FR)**

Remarks:
 This application was filed on 31-10-2024 as a
 divisional application to the application mentioned
 under INID code 62.

(54) **GENERATING A CAD FEATURE TREE FROM A DISCRETE GEOMETRICAL REPRESENTATION OF A MECHANICAL PART**

(57)    The disclosure relates to a method for generating a CAD feature tree from a discrete geometrical representation of apart. The method comprises providing the representation. The method comprises providing a set of CAD features. The method comprises optimizing an objective function rewarding a fitting of the discrete geometrical representation by a candidate sequence of CAD features and penalizing a complexity of the candidate sequence. The complexity of the candidate sequence is a function of the candidate sequence that increases when adding a feature to the candidate sequence. The optimization comprises determining one or more sequences of CAD features from the set of CAD features, including performing a depth-first search in a tree of candidate sequences of CAD features based on rewarding a fitting of the discrete geometrical representation by a candidate sequence and on penalizing a complexity of a candidate sequence.

EP 4 632 616 A1

**Description**

**TECHNICAL FIELD**

The disclosure relates to the field of computer programs and systems, and more specifically to a method, system and program for generating a CAD feature tree from a discrete geometrical representation of a mechanical part.

**BACKGROUND**

A number of solutions, hardware and software, are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for analyzing and simulating the physical behavior of a future product. CAM is an acronym for Computer-Aided Manufacturing, e.g. it relates to software solutions for defining product manufacturing processes and resources. In such computer-aided design solutions, the graphical user interface plays an important role as regards the efficiency of the technique. These techniques may be embedded within Product Lifecycle Management (PLM) solutions. PLM refers to an engineering strategy that helps companies to share product data, apply common processes, and leverage corporate knowledge for the development of products from conception to the end of their life, across the concept of extended enterprise. The PLM solutions provided by Dassault Systèmes (under the trademarks CATIA, SIMULIA, DELMIA and ENOVIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the solutions deliver common models linking products, processes, resources to enable dynamic, knowledge-based product creation and decision support that drives optimized product definition, manufacturing preparation, production and service.

Within this context, there is still a need for improved solutions for generating a CAD feature tree from a discrete geometrical representation of a mechanical part.

**SUMMARY**

It is therefore provided a computer-implemented method for generating a CAD feature tree from a discrete geometrical representation of a mechanical part. The method comprises providing the discrete geometrical representation. The method further comprises providing a set of CAD features. The method further comprises optimizing an objective function. The objective function rewards a fitting of the discrete geometrical representation by a candidate sequence of CAD features. The objective function penalizes a complexity of the candidate sequence. The complexity of the candidate sequence is a function of the candidate sequence that increases when adding a feature to the candidate sequence. The optimization comprises determining one or more sequences of CAD features from the set of CAD features. The determining of the one or more sequences of CAD features comprises performing a depth-first search in a tree of candidate sequences of CAD features. The depth-first search is based on rewarding a fitting of the discrete geometrical representation by a candidate sequence. The depth-first search is further based on penalizing a complexity of a candidate sequence.

The method may comprise one or more of the following:

- the performing of the depth-first search comprises one or more iterations of:

    ◦ selecting, among partial candidate sequences of the tree resulting from the previous iterations, a partial candidate sequence having a best selection score, the selection score of a partial sequence being a score that:

        ▪ rewards the fitting of the discrete geometrical representation by the partial sequence,
        ▪ penalizes the complexity of the partial sequence, and
        ▪ rewards an expected maximal fitting of a parent of the partial sequence, the expected maximal fitting of a parent of the partial sequence being based on a known maximal fitting of children of the partial sequence;

    ◦ iteratively adding CAD features to the selected partial candidate sequence based on a greedy score, the greedy score of a partial sequence being a score that:

        ▪ rewards the fitting of the discrete geometrical representation by the partial sequence;
        ▪ penalizes the complexity of the partial sequence, and
        ▪ rewards a fitting upper bound of the discrete geometrical representation by the partial sequence,

thereby obtaining a candidate sequence of CAD features,

◦ adding, to the partial candidate sequences of the tree, all partial candidate sequences considered in the iteratively adding of the CAD features and which have not yielded the obtained candidate sequence of CAD features;

◦ for each partial sequence of the obtained candidate sequence, updating the maximal fitting of children of the partial sequence, and increasing a number of times where a child of the partial sequence has been selected based on the selection score; and

◦ pruning each candidate sequence of the tree having a pruning score smaller than a best value of the objective function among all obtained candidate sequences, the pruning score of a candidate sequence being a score that:

- ▪ rewards the fitting upper bound of the discrete geometrical representation by the candidate sequence, and
- ▪ penalizes the complexity of the candidate sequence;

- the selection score of a sequence s is of the type:

-

$$u(s) = decay(s) * \left(\mathcal{A}_M(T(s)) + \left(1 - \mathcal{A}_M(T(s))\right) * \mathcal{A}_M^{expected}(s) - \alpha \mathcal{C}_M(s)\right)$$

where:

◦ *decay(s)* = $\theta^{n(s)}$ with $\theta$ a constant, $n(s)$ being the number of times where a child of the parent of s has been selected based on the selection score,

◦ $\mathcal{A}_M(T(s))$ is the fitting of the discrete geometrical representation by the sequence s, *T(s)* being a CAD feature tree resulting from the candidate sequence *s,*

◦

$$\mathcal{A}_M^{expected}(s)$$

is the expected maximal fitting of the parent of the sequence *s,*

◦ $\mathcal{C}_M(s)$ is the complexity of the sequence *s,* and

◦ $\alpha$ is a constant;

$$\mathcal{A}_M^{expected}(s) = \gamma^{n(s)} * \tilde{\mathcal{A}}_M(s) + \left(1 - \gamma^{n(s)}\right) * \mathcal{A}_M^{max}(s)$$

where:

◦ $\gamma$ is a constant,

◦ $\tilde{\mathcal{A}}_M(s)$ is the fitting upper bound of *s,* and

◦

$$\mathcal{A}_M^{max}(s)$$

is the maximal fitting of children of a parent of *s;*

- the greedy score of a sequence *s* is of the type:

$$r(s) = \tilde{\mathcal{A}}_M(s) + \beta \mathcal{A}_M(T(s)) - \alpha \mathcal{C}_M(s)$$

where:

- ○ $\tilde{\mathcal{A}}_M(s)$ is the fitting upper bound of *s*,

- ○ $\mathcal{A}_M(T(s))$ is the fitting of the discrete geometrical representation by the sequence s, *T(s)* being a CAD feature tree resulting from the candidate sequence *s*,

- ○ $\mathcal{C}_M(s)$ is the complexity of the sequence *s*, and
- ○ $\alpha$ and $\beta$ are constants;

- the pruning score of a sequence *s* is of the type:

$$h(s) = \tilde{\mathcal{A}}_M(s) - \alpha \mathcal{C}_M(s)$$

where:

- ○ $\tilde{\mathcal{A}}_M(s)$ is the fitting upper bound of *s*,

- ○ $\mathcal{C}_M(s)$ is the complexity of the sequence *s*, and
- ○ $\alpha$ is a constant;

- the objective function comprises a subtraction of the complexity of a candidate sequence by a term rewarding a fitting of the discrete geometrical representation by the candidate sequence;
- the term rewarding a fitting is weighted by a weighting parameter;
- the objective function is of the type:

$$\mathcal{J}(s) = \alpha \mathcal{C}_M(s) - \mathcal{A}_M\big(T(s)\big)$$

where s is the candidate sequence, $\mathcal{J}(s)$ is the objective function, $\mathcal{C}_M$ is the complexity of the candidate sequence and $\mathcal{A}_M(T(s))$ is the term rewarding the fitting, $\alpha$ is a weighting parameter, and *T(s)* is a CAD feature tree resulting from the candidate sequence *s*;

- the optimization of the objective function is under a constraint that each of the determined one or more sequences has a fitting of the discrete geometrical representation that is larger than a fitting threshold;
- the rewarding of a fitting is based on a ratio between a surface area of a covering of the discrete geometrical representation by the candidate sequence, and a surface area of the discrete geometrical representation; and/or
- the complexity is of the type:

$$\mathcal{C}_M(f_1, \cdots, f_n) = \frac{1}{M}\left(\left(\sum_{i=1}^{n} |\partial f_i \cap M|\right) - |\partial T(f_1, \cdots, f_n)_+ \cap M|\right)$$

where $\mathcal{C}_M$ is the complexity of a sequence s of CAD features $(f_1, \cdots, f_n)$, $\partial T(f_1, \cdots, f_n)_+$ is a boundary of a feature resulting from the sequence s, n is the number of CAD features in the sequence s, $\partial f_i$ is a boundary of the CAD feature $f_i$, $\partial f_i \cap M$ is an intersection between the boundary $\partial f_i$ and the discrete geometrical representation *M*, and the function | N| outputs the surface area of the argument *N*.

It is further provided a computer program comprising instructions for performing the method.
It is further provided a computer readable storage medium having recorded thereon the computer program.
It is further provided a system comprising a processor coupled to a memory, the memory having recorded thereon the computer program.

## BRIEF DESCRIPTION OF THE DRAWINGS

Non-limiting examples will now be described in reference to the accompanying drawings, where:

- FIG.s 1 to 4 illustrate the method; and

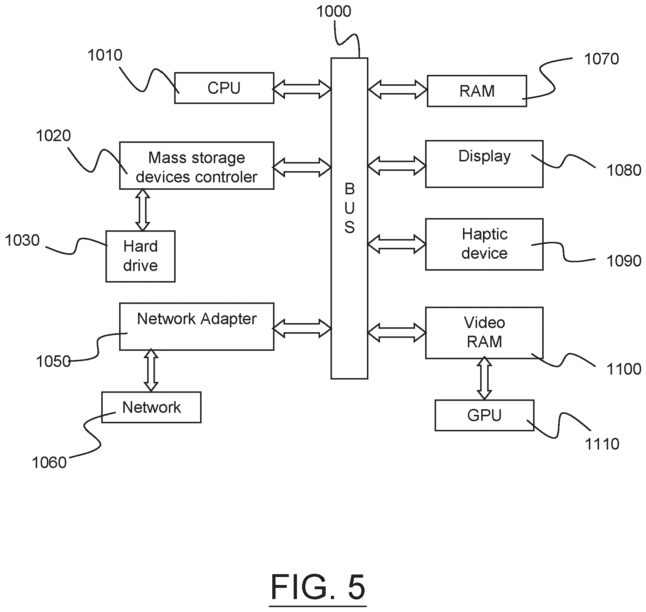

- FIG. 5 illustrates the system.

## DETAILED DESCRIPTION

It is proposed a computer-implemented method for generating a CAD feature tree from a discrete geometrical representation of a mechanical part. The method comprises providing the discrete geometrical representation. The method further comprises providing a set of CAD features. The method further comprises optimizing an objective function. The objective function rewards a fitting of the discrete geometrical representation by a candidate sequence of CAD features. The objective function penalizes a complexity of the candidate sequence. The complexity of the candidate sequence is a function of the candidate sequence that increases when adding a feature to the candidate sequence. The optimization comprises determining one or more sequences of CAD features from the set of CAD features. The determining of the one or more sequences of CAD features comprises performing a depth-first search in a tree of candidate sequences of CAD features. The depth-first search is based on rewarding a fitting of the discrete geometrical representation by a candidate sequence. The depth-first search is further based on penalizing a complexity of a candidate sequence.

This constitutes an improved solution for generating a CAD feature tree from a discrete geometrical representation of a mechanical part.

First, the generation of a CAD feature tree from a discrete geometrical representation of a mechanical part allows to prepare the mechanical part in view of the manufacturing and is particularly relevant in the field of manufacturing CAD. Indeed, a CAD feature tree is a manufacturable model of the part. Manufacturing CAD designates the field of software solutions and systems (CAD systems, CAM systems) for the design and/or manufacturing of mechanical parts. Generating a CAD feature tree representing a mechanical part allows an easy manipulation and/or editability and/or efficient storage in memory. Furthermore, a CAD model that includes a CAD feature tree forms a basis for the downstream manufacturing of the part represented by the CAD model, as further discussed hereinafter. The method may be part of a design and/or manufacturing process of the mechanical part. In this process, the method may form or be part of a step of obtaining a CAD model (e.g. consisting of a feature tree) of the discrete geometrical representation, for example a step of conversion of a CAE model into a CAD model. This process may further comprise using the output of the method (e.g. a CAD feature tree representation of the part) for manufacturing the part, as further discussed hereinafter.

In that context, the method obtains one or more CAD models each comprising or consisting in one of the one or more determined sequences of CAD features, or one or more determined CAD feature tree obtained therefrom (i.e., each CAD feature tree corresponding a determined sequence of CAD features), by optimizing the objective function. The objective function rewards a fitting of the provided discrete geometrical representation by a candidate sequence (of CAD features) while penalizing a complexity of said candidate sequence. Thereby, the method enables controlling the quality of the generated CAD features to fit a provided geometry, and the complexity of the generated CAD features simultaneously using an optimization procedure of an objective function. The objective function combines both the fitting quality and complexity factors. This constitutes an improved solution for generating CAD feature trees in particular for non-simplistic (e.g., standard or complex) mechanical products with adequate accuracy and fidelity to the provided geometrical representation of said products while keeping the method computationally efficient by controlling the complexity of the generated CAD feature tree. Such a complexity is an increasing function of a size of the candidate sequence in the sense that when a feature is added to the candidate sequence, the value of the complexity function increases. Thereby, the method efficiently controls the size (i.e., the number of included features) in the sequence.

Furthermore, the determination of the one or more sequences of CAD features comprises performing a depth-first search in a tree of candidate sequences of CAD features. In other words, the optimization is based on a depth-first search of the tree of candidate solutions. The depth-first search is based on the above objective criteria of the optimization (rewarding fitting and penalizing complexity). Using a depth-first search to explore the set of the possible solutions of the optimization is particularly fast and efficient (for example as compared to a width exploration of the tree of possible solutions). Quality sequences are thus returned quickly by the method. For example, for very simple mechanical parts, one iteration in the depth-first search may already yield quality solution(s).

The method is for generating a CAD feature tree from the discrete geometrical representation of a mechanical part. This means that the method outputs data that allows to define such feature tree. Each sequence determined by the method is such output data, and the method may comprise defining a feature tree that corresponds to the sequence. The sequence itself may be the tree, with the order of the features in the sequence yielding the topology of the tree. The method may obtain one or more than one sequence of CAD features. The method then may output all the determined sequences, for example, by presenting them to a user. The user may choose one of the determined sequences based on a technical criterion, for example, the user may choose the most accurate sequence (*i.e.,* the one with the best fitting) or the least complex one. Alternatively, the method may output one of the determined sequences to the user according to such criteria (*e.g.,* the most accurate or the least complex sequence). In other words, the method finds the combination(s) of the features of the provided set to create a feature tree, *i.e.* a combination of the different features in a certain order so that the result of the final combination is a 3D volume whose boundary is close to the 3D discrete representation's boundary (*e.g.* surface mesh).

The method comprises providing the discrete geometrical representation (of the mechanical part), and a set of CAD features. "Providing" an input (e.g., the discrete geometrical representation, or the set of CAD features) may consist in or comprise retrieving (*e.g.* downloading) said input from a (*e.g.* distant) memory or database or server or cloud. Alternatively, "providing" an input may consist in or comprise creating the input. For example, for the set of CAD features, the method may comprise detecting at least some of the CAD features (*e.g.* all) on the discrete geometrical representation. This may for example comprise detecting extrusions using the extrusion detection method disclosed in European Patent Application EP21305673.2 or in European Patent Application EP21306184.9, detecting revolutions using the revolution detection method disclosed in European Patent Application EP21305763.1, and/or detecting drafts using the draft detection method disclosed in European Patent Application EP23306189.4. All these European Patent Applications are incorporated herein by reference. Canonic features may be detected using suitable detection methods. Alternatively or additionally, providing the set of CAD features may comprise using as the set or as a part thereof a pool of classical CAD features (extrusions, sweeps, revolutions, drafts, fillets, rounds, canonic features).

The provided discrete geometrical representation may be a 3D mesh or a 3D point cloud representing the mechanical part. The provided discrete geometrical representation may stem from physical measurements on a real object (the mechanical part), for example within a reconstruction process as discussed hereinbelow, *e.g.* upon scanning the real object (*e.g.,* a 3D scan). In such cases, the providing of the discrete geometrical representation may comprise the reconstruction process which obtains the discrete geometrical representation of the mechanical product from the physical measurements. The method may then determine one or more sequences of CAD features from the provided set of CAD features by optimizing an objective function based on the obtained discrete geometrical representation. This allows to infer a CAD feature tree on a measured model, *i.e.* a model that stems from physical measurements *(e.g.* 3D scan) in the real world.

The provided discrete geometrical representation may alternatively originate from a CAD or CAE model designed by another CAD system and for which the CAD feature tree is unknown. In such cases, the providing of the discrete geometrical representation may comprise inputting (*e.g.* by reading from a local memory or a remote database) the discrete geometrical representation (*e.g.* upon a transform from an existing CAD/CAE model) and determining the respective one or more CAD feature sequences.

As said above, the method comprises providing the set of CAD features. As known *per se* a "CAD feature" or equivalently a geometric CAD feature is a parametric shape description of a space region with particular geometric or topological properties. As known *per se* from CAD, a CAD feature includes shape/geometry information and parametric information for representing a portion of the manufacturing product modeled/captured by the CAD feature. The CAD feature may as known comprise a definition/specification of a geometry/shape corresponding to the portion modeled by the CAD feature (e.g. a definition/specification geometric primitive) and one or more CAD parameters that specify the geometry and its topology. Features may be couples with Boolean Operations like splits, unions or subtractions, to yield the corresponding geometry.

The concept of CAD feature tree is well-known in CAD. The (CAD) feature tree is a tree organization of CAD operations (e.g. including Boolean and non-Boolean operations) on CAD features that each model a portion of the manufacturing product. More specifically, the feature tree is a directed acyclic graph (as discussed in https://en.wikipedia. org/wiki/Directed acyclic graph) that describes/captures the order of sequence and combination of the CAD operations. The feature tree thus includes one or more CAD parameters each being respective to a respective CAD feature of the feature tree. Non-limitative examples of such CAD parameters include: coordinates of a point in a sketch, height of extrusion of a profile, thickness of a shell, radius of a fillet, and smoothness of a loft surface.

Thereby, the provided set of CAD features may comprise or consists in providing a set of parameters such that each element of the set (i.e., a group of parameters) comprises the one or more CAD parameters of a CAD feature of the provided set of CAD features. The provided set of CAD features may comprise or consist in detected CAD features from the provided discrete geometrical representation (as previously explained). In such cases, as previously outlined, the providing of the set of CAD features may further comprise performing a feature detection method on a set of discrete geometrical representations (among which, the provided discrete geometrical representation) to obtain one or more detected features, and to insert the one or more detected features in the provided dataset. Alternatively, or additionally, the providing of the set of CAD features may comprise providing a set of CAD features extracted from a general CAD features library which (e.g., significantly) includes all the usual CAD features. Yet, alternatively, or additionally, the providing of the set of CAD features may comprise providing a tailor-made set from a relevant real-world use of the mechanical product in which the mechanical product is supposed to be used (e.g., features presenting standard holes according to a known standard in said technical field).

In the present disclosure, any feature f may be defined as a pair of two disjoint open 3D domains:

$$f = (f_-, f_+)$$

where $f_-$ is an erasing volume, and $f_+$ and additive volume. f is said to be elementary if $f_- = \emptyset$ or $f_+ = \emptyset$. Let $\mathcal{F}$ (resp. $\mathcal{F}_e$) the set of all features (resp. elementary features). The combination of two features f, g may be defined by the operation $\star$ as follows:

$$\star: \left| \begin{array}{l} \mathcal{F} \times \mathcal{F} \to \mathcal{F} \\ (f, g) \mapsto f \star g = \left( (f_+ \setminus g_-) \cup g_+, \ (f_- \setminus g_+) \cup g_- \right) \end{array} \right. .$$

A sequence of feature is a set of features to be applied in a certain order, and the composition of the features in that order is the result of the feature sequence. This may be defined as follows. Let $\mathcal{B}_0 \subset \mathcal{F}_e$ be a finite subset of elementary features. A feature sequence from $\mathcal{B}_0$ is a sequence:

$$s = (f_1, \cdots, f_n) \in (\mathcal{B}_0)^n$$

such that $\forall \ 1 < i \# = j <_- n, f_i \neq f_j$. (a certain feature cannot be put more than one time in a sequence). Let $S(B_o)$ the set of all possible features sequences from $\mathcal{B}_0$. The map:

$$T: \left| \begin{array}{l} \mathcal{S}(\mathcal{B}_0) \ \to \ \mathcal{F} \\ (f_1, \cdots, f_n) \mapsto f_1 \star \cdots \star f_n \end{array} \right.$$

computes the result feature from a features sequence.

To make the depth-first search more efficient, the set of sequences may be restrained in implementations by choosing a subset of valid sequences $\mathcal{S}_{val}(\mathcal{B}_0) \subset S(B_o)$. An example of a way to do that is to define a partial order $<$ on the basket of initial features $\mathcal{B}_0$. Then $s = (f_1, ..., f_k) \in \mathcal{S}(\mathcal{B}_0)$ belongs in $\mathcal{S}_{val}(\mathcal{B}_0)$ if and only if one never has $f_j < f_i$ for $1 < i < j <_- k$.

A completion of a sequence $s = (f_1, ..., f_k) \in \mathcal{S}_{val}(\mathcal{B}_0)$ is a sequence $s' = (f_1, \cdots, f_k, f_{k+1}, \cdots, f_m) \in \mathcal{S}_{val}(\mathcal{B}_0)$ (with $m > k$). The length of the completion is the difference of the lengths of $s$ and $s'$ (so at least 1). A sequence $s \in \mathcal{S}(\mathcal{B}_0)$ is said to be maximal if it has no completion.

The method further comprises optimizing the objective function. The objective function is a function that takes as input a candidate sequence of CAD features. By "candidate sequence of CAD features", it is meant any sequence of CAD features of the provided set of CAD features that it considered, at least at some point of the optimization, as a possible solution to the optimization. The objective function rewards a fitting of the discrete geometrical representation by the candidate sequence of CAD features. This means that the function tends to decrease as the fitting of the discrete geometrical representation by the candidate increases, *i.e.* the more a candidate sequence produces a geometry that fits well the input discrete geometrical representation the more the value of the objective function decreases. The function also penalizes a complexity of the candidate sequence. This means that the function tends to increase as the complexity of the candidate increases, *i.e.* the more complex a candidate sequence is the more the value of the objective function increases. The complexity of the candidate sequence is a function of the candidate sequence that increases when adding a feature to the candidate sequence.

The objective function may comprise or consist in a subtraction of the complexity of a candidate sequence by a term rewarding a fitting of the discrete geometrical representation by the candidate sequence. The term rewarding a fitting may be weighted by a weighting parameter. The objective function may be of the type (*e.g.* may be given by the formula):

$$\mathcal{J}(s) = \alpha \mathcal{C}_M(s) - \mathcal{A}_M\big(T(s)\big)$$

where $s$ is the candidate sequence, $\mathcal{J}(s)$ is the objective function, $\mathcal{C}_M$ is the complexity of the candidate sequence and $\mathcal{A}_M(T(s))$ is the fitting term *(i.e.* the term rewarding the fitting), $\alpha$ is a weighting parameter (which can be taken between 0 and 0.5 for example), and $T(s)$ is a CAD feature tree resulting from the candidate sequence $s$. In all the present disclosure, $T(s)$ denotes a CAD feature tree resulting from the sequence $s$. $\mathcal{A}_M(T(s))$ may be referred to as the accuracy function, which is a map $\mathcal{A}_M : \mathcal{F} \to [0,1]$ where $\mathcal{A}_M(f)$ measures how close the feature f (f can be an elementary feature or a feature sequence) is from the input geometry M *(i.e.* the discrete geometrical representation). The rewarding of a fitting may be based on a ratio between a surface area of a covering of the discrete geometrical representation by the candidate sequence, and a surface area of the discrete geometrical representation. In other words, the closer $\mathcal{A}_M(f)$ gets to 1, the more accurate f is with respect to M. For example, if M is a surface mesh, $\mathcal{A}_M(f)$ may be given by the formula:

$$\mathcal{A}_M(f) = \frac{|\partial f_+ \cap M|}{|M|},$$

a being the classical mathematical symbol for the boundary.

The complexity $\mathcal{C}_M$ may be a map

$$\mathcal{C}_M : \mathcal{S}(\mathcal{B}_0) \to \mathbb{R}_+$$

that satisfies:

$$\mathcal{C}_M(f_1, \cdots, f_k) \le \mathcal{C}_M(f_1, \cdots, f_k, f_{k+1}) \quad \forall (f_1, \cdots, f_k, f_{k+1}) \in \mathcal{S}(\mathcal{B}_0)$$

For example, the complexity may be of the type (e.g. may be given by the formula):

$$\mathcal{C}_M(f_1, \cdots, f_n) = \frac{1}{M}\left(\left(\sum_{i=1}^{n} |\partial f_i \cap M|\right) - |\partial T(f_1, \cdots, f_n)_+ \cap M|\right)$$

where $\mathcal{C}_M$ is the complexity of a sequence s of CAD features $(f_1, \cdots, f_n)$, $\partial T(f_1, \cdots, f_n)_+$ is a boundary of a feature resulting from the sequence s *(i.e.* the boundary of the feature (actually of its additive volume) resulting from the composition corresponding to the sequence), n is the number of CAD features in the sequence s, $\partial f_i$ is a boundary of the CAD feature $f_i$, $\partial f_i \cap M$ is an intersection between the boundary $\partial f_i$ and the discrete geometrical representation $M$, and the function $|N|$ outputs the surface area of the argument $N$.

The optimization of the objective function may be under a constraint that each of the determined one or more sequences has a fitting of the discrete geometrical representation that is larger than a fitting threshold. In other words, the optimization problem may be formulated as follows:

$$\min_{s \in \mathcal{S}_{val}(\mathcal{B}_0)} \mathcal{J}(s) = \alpha \mathcal{C}_M(s) - \mathcal{A}_M\big(T(s)\big)$$

$$\text{s.t.} \quad \mathcal{A}_M\big(T(s)\big) \ge \rho$$

Where $S_{ad}(\mathcal{B_0})$ c $\mathcal{S}_{val}(\mathcal{B_0})$ is the set of sequences $s$ of $\mathcal{S}_{val}(\mathcal{B_0})$ that satisfy the constraint $\mathcal{A}_M(T(s)) >\_\rho$ (and may be referred to as "admissible sequences"), $\alpha$ is a constant (which can be taken between 0 and 0.5 for example), and $\rho$ is a constant (which can be taken between 0.8 and 1 for example).

The optimization comprises the determining one or more sequences of CAD features from the set of CAD features, *i.e.* searching for one or more sequences of CAD features by constructing them from the set of CAD features so that they optimize or tend to optimize (*i.e.* with respect to suitable convergence criteria) the objective function.

The determining of the one or more sequences of CAD features comprises performing a depth-first search in a tree of candidate sequences of CAD features. It is to be understood that the tree of candidate sequences may not be provided as an input, *i.e.* there may be no input consisting of a tree of all the possible solutions (candidate sequences) of the optimization. To the contrary, the tree may be iteratively constructed by the search, where at each iteration the search explores and further builds on (in a depth-first search manner) the tree resulting from the previous iteration.

The depth-first search is based on rewarding a fitting of the discrete geometrical representation by a candidate sequence and is also based on penalizing a complexity of a candidate sequence. This means that the search tends to select/construct candidate sequences fitting well the discrete geometrical representation while being at the same time not too complex. The fitting and/or the complexity may be defined as for the objective function (*i.e.* may be defined with the same functions as described above for the objective function).

The performing of the depth-first search may comprise one or more iterations.

The tree may be initialized at the first iteration as the tree of all the sequences of only one feature selected from the provided set of features. These sequences may be stored as the explorable nodes set. The root of the tree may be defined as the empty sequence. In the tree, each node represents a partial sequence and child of a node adds a feature (selected from the set) to the sequence corresponding to the node. Each node may contain information concerning the previous iterations (such as the best optimization score $\mathcal{J}(s)$ obtained from the iteratively adding using the greedy score as described below (this step being also referred to as "rollout"), and the number $n(s)$ of rollouts made from a node or one of its children). At the first iteration, the method may store the best sequence s* *(i.e.* the candidate sequence having the lowest value for $\mathcal{J}(s)$) and the set of all admissible sequences

$$\mathcal{S}_{ad}^{*}$$

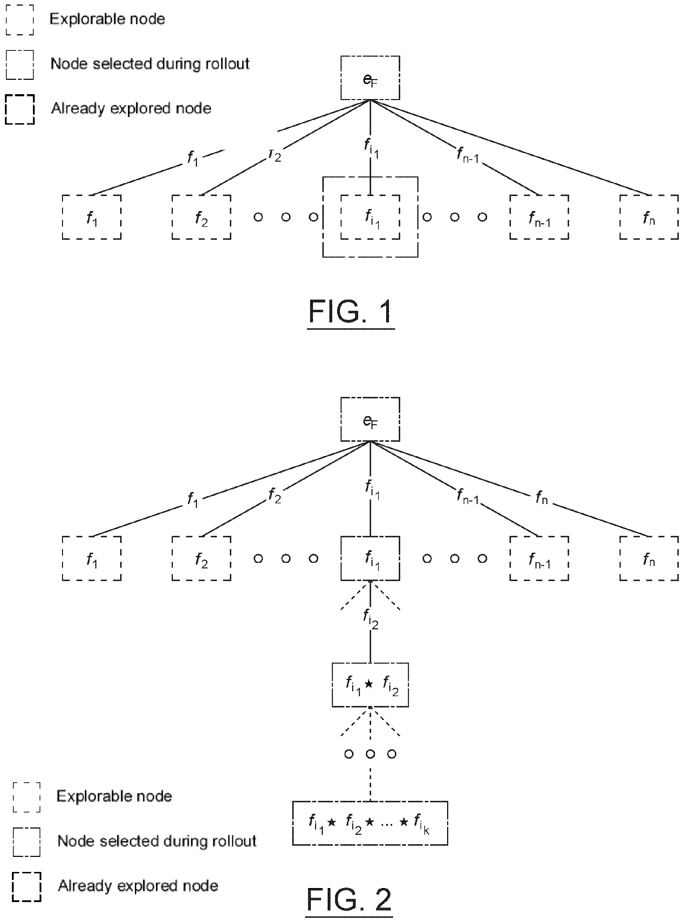

*(i.e.* the set of all the possible sequences in the first iteration that satisfy the inequality $\mathcal{A}_M(T(s)) \le \rho$ as previously discussed). FIG. 1 shows an example illustration of the tree.

Each iteration comprises selecting, among partial candidate sequences of the tree resulting from the previous iterations, a partial candidate sequence having a best selection score. This means that at each iteration, there is a tree of partial candidate sequences that results from the previous iterations. This tree is explored so as to select a partial candidate sequence in the tree that has the best selection score (*i.e.* the highest selection score). The selection score of a partial sequence is a score (*e.g.* quantified by a function) that:

- rewards the fitting of the discrete geometrical representation by the partial sequence (*i.e.* the more the partial sequence fits the discrete geometrical representation the larger the value of the score),
- penalizes the complexity of the partial sequence (*i.e.* the more complex the partial sequence is the smaller the value of the score), and
- rewards an expected maximal fitting of a parent of the partial sequence (*i.e.* the higher the value of this expected maximal fitting the larger the value of the score), the expected maximal fitting of a parent of the partial sequence being based on a known maximal fitting of children of the partial sequence.

The selection score of a sequence s may be of the type (*e.g.* may be given by the formula):

$$u(s) = decay(s) * (\mathcal{A}_M(T(s)) + \left(1 - \mathcal{A}_M(T(s))\right) * \mathcal{A}_M^{expected}(s) - \alpha\mathcal{C}_M(s))$$

where:

∘ *decay*$(s) = \theta^{n(s)}$ with $\theta$ a constant (for example taken between 0,5 and 1), $n(s)$ being the number of times where a child of the parent of s has been selected (*i.e.* in the previous iterations, at the selection step) based on the selection score ($n(s)$ also corresponding to the number of rollout made from the parent node of s). This decay may favor exploration of

unexplored branches,

◦ $\mathcal{A}_M$ (T(s)) is the fitting of the discrete geometrical representation by the sequence s,

◦

$$\mathcal{A}_M^{expected}(s)$$

is the expected maximal fitting of the parent of the sequence s,

◦ $\mathcal{C}_M$ (s) is the complexity of the sequence s, and

◦ $\alpha$ is a constant.

$\alpha$, $\mathcal{C}_M$ (s), and $\mathcal{A}_M$ (T(s)) may be defined as defined above for the objective function, and

$$u: \mathcal{S}_{val}(\mathcal{B}_0) \to \mathbb{R}.$$

The selection step may thus consist in selecting the partial candidate sequence of the tree that has the largest value u(s). The selection score is used to determine the most promising nodes during the selection step as it is higher when a node is more promising.

$$\mathcal{A}_M^{expected}(s)$$

$$\mathcal{A}_M^{expected}(s) = \gamma^{n(s)} * \tilde{\mathcal{A}}_M(s) + \left(1 - \gamma^{n(s)}\right) * \mathcal{A}_M^{max}(s)$$

may be given by the formula : where:

◦ $\gamma$ is a constant (taken between 0.5 and 1 for example),

◦ $\tilde{\mathcal{A}}_M$ (s) is the fitting upper bound of s, and

◦

$$\mathcal{A}_M^{max}(s)$$

is the maximal fitting of children of a parent of s *(i.e.* the maximal reached fitting of the rollouts made from the parent node of s).

The selection may comprise, for each explorable node, computing its selection score u(s) and selecting the node with the highest selection score. As several nodes may have high equal selection scores, the method may select one node amongst them using the following SoftMax strategy:

◦ assign a SoftMax weight to each of the top k nodes (k = 50 for example) using the following SoftMax function:

$$\sigma\left(s_j\right) = \frac{e^{\frac{u(s_j)}{\tau}}}{\sum_{i=1}^{k} e^{\frac{u(s_i)}{\tau}}},$$

where $\tau$ is a parameter called SoftMax temperature. Lower temperatures make SoftMax weight more confident (node with higher selection score will get higher weights) and when $\tau \to 0$, the SoftMax strategy will be closer to choosing the node with the highest selection score;

◦ select a node between those top k nodes using a random sampling using the SoftMax weights as probabilities for each node.

Each iteration then comprises iteratively adding CAD features to the selected partial candidate sequence based on a greedy score. This means that CAD features are added iteratively (*i.e.* with iterations within said each iteration) to the partial candidate sequence having the best selection score, each CAD feature being added because of its greedy score (*e.g.* because it has the best greedy score, *e.g.* the greedy score with the highest value) In the cases where several CAD features have the best greedy score, the method may add any one of them (*e.g.* by selecting it randomly among the CAD features having the best greedy score). In practice, this situation almost never occurs, except when two CAD features are completely equivalent, *i.e.* they represent a same volume up to machine accuracy. The iteratively adding may be referred to as "the rollout" and thus consists in, starting from the selected node (the node corresponding to the partial candidate sequence), iteratively selecting the best greedy child (which is equivalent to adding a feature to the partial sequence corresponding to the node) using a greedy score. The rollout may stop when there is no more feature available or none of the available feature improves the feature sequence. FIG. 2 illustrates the rollout.

The greedy score of a partial sequence is a score (*e.g.* quantified by a function) that:

  ◦ rewards the fitting of the discrete geometrical representation by the partial sequence (*i.e.* the higher the fitting the higher the value of the score);
  ◦ penalizes the complexity of the partial sequence (*i.e.* the higher the complexity the lower the value of the score), and
  ◦ rewards a fitting upper bound of the discrete geometrical representation by the partial sequence (*i.e.* the higher the fitting upper bound the higher the value of the score),

This iterative addition of CAD features to the selected partial candidate results in the obtention a new candidate sequence of CAD features in the tree (the selected partial candidate to which the feature has been iteratively added).

The greedy score of a sequence *s* may be of the type (*e.g.* may be given by the formula):

$$r(s) = \tilde{\mathcal{A}}_M(s) + \beta \mathcal{A}_M(T(s)) - \alpha \mathcal{C}_M(s)$$

where:

  ◦ $\tilde{\mathcal{A}}_M(s)$ is the fitting upper bound of *s,*

  ◦ $\mathcal{A}_M(T(s))$ is the fitting of the discrete geometrical representation by the sequence *s,*

  ◦ $\mathcal{C}_M(s)$ is the complexity of the sequence *s,* and
  ◦ $\alpha$ and $\beta$ are constants.

$\alpha$, $\mathcal{C}_M(s)$, and $\mathcal{A}_M(T(s))$ may be defined as defined above for the objective function. The greedy score is a function

$$r: \mathcal{S}_{val}(\mathcal{B}_0) \to \mathbb{R}.$$

$\beta$ is a constant which can be taken between 0 and 0.5 for example. The greedy score is used to choose the best sequence (*i.e.* the one with the highest score) during the greedy rollout.

Each iteration further comprises adding (*i.e.* as new nodes) to the partial candidate sequences of the tree (*i.e.* as it is in the current iteration), all partial candidate sequences considered (*i.e.* explored, browsed) in the iteratively adding of the CAD features and which have not yielded the obtained candidate sequence of CAD features.

Each iteration further comprises, for each partial sequence of the obtained candidate sequence (*i.e.* the one resulting from the rollout), updating the maximal fitting of the children of the partial sequence, and increasing a number of times $n(s)$ where a child of the partial sequence has been selected based on the selection score. This may be referred to as the "backpropagation step", which may thus consist in

using the complete sequence obtained from the rollout and updating the information of all its parent nodes. The updating may update the best optimization score obtained if the complete sequence gave a better score (*i.e.* than the current best sequence) and increasing the number of rollouts made from these parent nodes. The backpropagation may comprise adding the complete sequence in the set of admissible sequences

$$\mathcal{S}^*_{ad}.$$

The backpropagation may comprise, if the obtained sequence provides a better optimization score than the current best sequence *s\**, replacing the best sequence with this new one.

Each iteration further comprises pruning each candidate sequence of the tree having a pruning score smaller than a best value of the objective function among all obtained candidate sequences. This pruning may be part of the backpropagation and may consist in removing from the explorable nodes all nodes that cannot lead to a better sequence than *s\**.

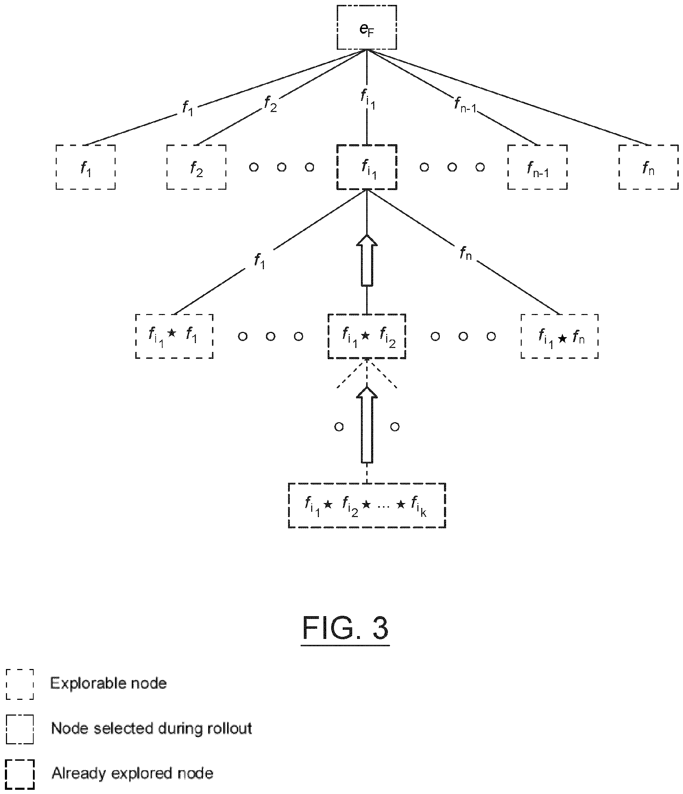

The backpropagation is illustrated by FIG. 3.

The pruning score of a candidate sequence is a score that rewards the fitting upper bound of the discrete geometrical representation by the candidate sequence, and that penalizes the complexity of the candidate sequence.

The pruning score of a sequence s may be of the type:

$$h(s) = \tilde{\mathcal{A}}_M(s) - \alpha \mathcal{C}_M(s)$$

where:

    ○ $\tilde{\mathcal{A}}_M(s)$ is the fitting upper bound of *s,*

    ○ $\mathcal{C}_M(s)$ is the complexity of the sequence *s,* and

    ○ a is a constant.

$\alpha$ and $\mathcal{C}_M(s)$, may be defined as defined above for the objective function. The pruning score is a function

$$h: \mathcal{S}_{val}(\mathcal{B}_0) \to \mathbb{R}.$$

Considering the best sequence *s\**, the method may delete any sequence *s* from the explorable nodes if:

$$h(s) < -\mathcal{J}(s^*) = \mathcal{A}_M\big(T(s^*)\big) - \alpha \mathcal{C}_M(s^*).$$

For any sequence s, the pruning score is always higher than - $\mathcal{J}(s)$ and than - $\mathcal{J}(s_{child})$ for all children sequences of *s.* Thus, this score may be compared in the method with the optimization score to remove nodes that cannot give better optimization score than *s\**.

The fitting upper bound (also referred to as "accuracy upper bound") is any function $\tilde{\mathcal{A}}: \mathcal{S}_{val}(\mathcal{B}_0) \to [0,1]$ such that for any sequence $(f_1, \cdots, f_{k+1})$:

$$\tilde{\mathcal{A}}(f_1, \cdots, f_k) \geq \tilde{\mathcal{A}}(f_1, \cdots, f_k, f_{k+1})$$

and

$$\tilde{\mathcal{A}}(s) \geq \mathcal{A}(s) \ \forall s \in \mathcal{S}_{val}(\mathcal{B}_0)$$

where the inequality becomes an equality if *s* is maximal. The fitting upper bound may in implementations be the theoretical covering disclosed in European Patent Application EP22305934.6.

The iterations may be stopped when a predefined stopping criterion is reached. This criterion may be defined, for example, as a maximum number of rollouts, a maximum number of visited nodes or when the best sequence score stops improving.

The method may end up with a set

$$\mathcal{S}_{ad}^* \subset \mathcal{S}_{ad}(\mathcal{B}_0).$$

The method may then comprise selecting the m best sequences in

$$\mathcal{S}_{ad}^*$$

according to the objective function $\mathcal{J}$ and shows them as the result. The method may comprise, by a user, choosing which one of the m sequences the user wants to keep. The chosen sequence constitutes an optimal CAD design of the 3D model, the discrete representation of which was given as input.

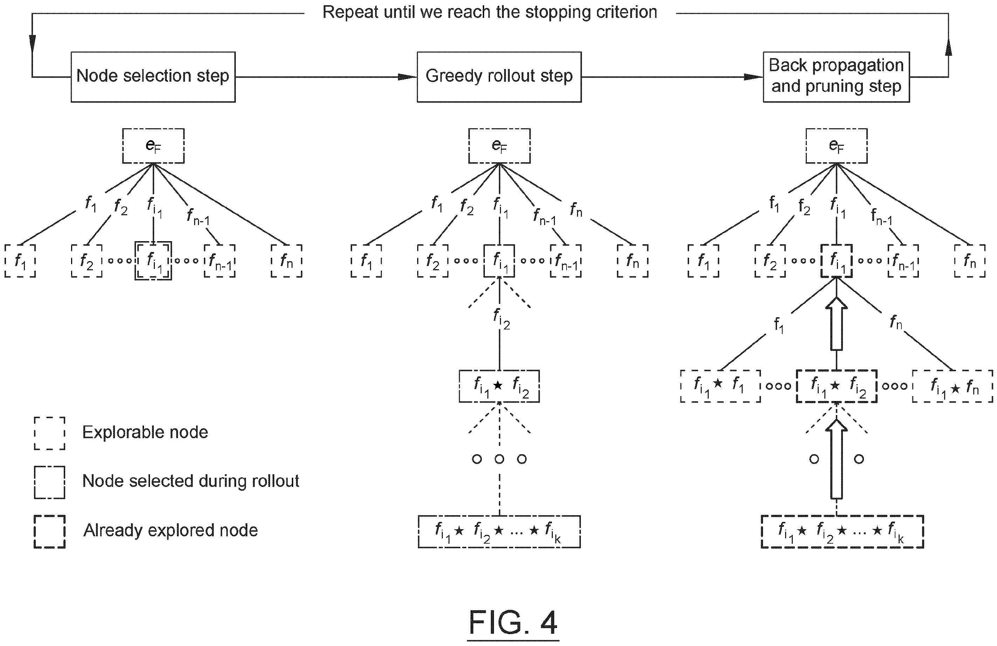

FIG. 4 illustrates an overview of the iterations.

The method thus focuses on combinations that take the form of sequences. In other words, the feature trees considered by the method consist of a choice of the features to use amongst all the possible elementary features given as inputs, and then an ordering of these chosen features (since the order will most of the time hugely change the result) specifying which operation should be done first, second, third, etc. To do that the method relies on an efficient exploration strategy (depth-first search) to look at some possible sequences that can be built from the starting feature set. Indeed, making an exhaustive search, although theoretically possible, is in practice not feasible, as the combinatorial complexity blow up very quickly. The method solves this using the depth-first search tree exploration, which may for example be chosen from a series of suitable known methods such as the Monte Carlo Tree Search algorithm. As explained above, the exploration may consist of iterative rounds that are stopped when a stopping criterion is satisfied.

Each round of the exploration may be divided into 3 steps as described above:

- The selection step: Using a selection criterion, the method selects one partial sequence to be completed among a set of explorable partial sequences.
- The rollout step: the method iteratively adds features to the previously selected sequence using a greedy completion criterion until reaching a complete sequence.
- The backpropagation step: Using the result of the rollout step, the method updates information of all partial sequences that led to the complete sequence. The method adds all other partial sequences encountered to the set of explorable sequences. Moreover, using a pruning criterion, the method removes from the explorable sequences set all partial sequences that cannot outperform the complete sequence.

The notion of "good" feature tree is captured by the method objectively by a concept of accuracy (good fitting to the input 3D model) (mesh, point cloud) as well as a concept of feature tree complexity. Those concepts are transformed into quantities that are used to evaluate numerically the quality of a feature tree (and select the best one) as well as to build heuristics.

The method implements a depth-first search method, which allows to obtain complete accurate feature sequences after few iterations. This allows to quickly remove partial sequences that will not outperform the best sequence. Furthermore, during the selection step, the method may select any partial sequence and so, even with longer sequences, the method may explore various sequences very diversified.

The method is also fast. Thus, it allows the automatic generation/reconstruction of complex CAD models that would have been nearly impossible to compute before, at least with this quality.

The method is also general, through the different notions of accuracy and complexity that can be used, the method can favor preferred designing patterns that serve a particular technical application, whether for example a design is to be conform to a certain legacy of CAD models, or the most accurate geometry possible is desired, or the model that is the most easily usable for simulation, etc.

The method only considers CAD models that are built from a sequence of elementary operators. This provides reduction of the complexity of the optimization (the exploration is easier) so there is a great efficiency gain.

Finally, the method is not limited to volume fitting as a fitting metric but may use any other metric to compare the fitting quality of the CAD reconstruction with respect to the 3D input.

"Designing a manufacturing product/mechanical part/mechanical product" designates any action or series of actions which is at least a part of a process of elaborating a modeled object (3D or 2D) of the manufacturing product/mechanical part/mechanical product. The method may form such a process or may form at least a part of the process. As previously said, the method may for or be a part of a design process step consisting in converting the discrete geometrical representation (which may be a CAE model) into a CAD model, such as a CAE to CAD conversion step.

The method thus generally manipulates modeled objects, such as the discrete geometrical representation provided as input to the method or an obtained CAD model thereof (*e.g.* a CAD feature tree). A modeled object is any object defined by data stored e.g. in the database. By extension, the expression "modeled object" designates the data itself.

According to the type of the system, the modeled objects may be defined by different kinds of data. The system may indeed be any combination of a CAD system, a CAE system, a CAM system, a PDM system and/or a PLM system. In those different systems, modeled objects are defined by corresponding data. One may accordingly speak of CAD object, PLM object, PDM object, CAE object, CAM object, CAD data, PLM data, PDM data, CAM data, CAE data. However, these systems are not exclusive one of the other, as a modeled object may be defined by data corresponding to any combination of these systems. A system may thus well be both a CAD, CAE, PLM and/or CAM system, as will be apparent from the definitions of such systems provided below.

By CAD solution (*e.g.* a CAD system or a CAD software), it is additionally meant any system, software or hardware, adapted at least for designing a modeled object on the basis of a graphical representation of the modeled object and/or on a structured representation thereof (*e.g.* a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 2D or 3D modeled object, e.g. representing a product such as a part or an assembly of parts, or possibly an assembly of products. The 2D or 3D modeled object may be a manufacturing product, *i.e.* a product to be manufactured. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates design (i.e. increases the speed at which designers statistically accomplish their task). This speeds up the manufacturing process in the industry, as the design of the products is part of the manufacturing process.

The 2D or 3D modeled object may represent the geometry of a product to be manufactured in the real world subsequent to the completion of its virtual design with for instance a CAD/CAE software solution or CAD/CAE system, such as a (e.g. mechanical) part or assembly of parts (or equivalently an assembly of parts, as the assembly of parts may be seen as a part itself from the point of view of the method, or the method may be applied independently to each part of the assembly), or more generally any rigid body assembly (e.g. a mobile mechanism). A CAD/CAE software solution allows the design of products in various and unlimited industrial fields, including: aerospace, architecture, construction, consumer goods, high-tech devices, industrial equipment, transportation, marine, and/or offshore oil/gas production or transportation. The 3D modeled object designed by the method may thus represent an industrial product which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

A CAD system may be history-based. In this case, a modeled object is further defined by data comprising a history of geometrical features. A modeled object may indeed be designed by a physical person (i.e. the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

By PLM system, it is additionally meant any system adapted for the management of a modeled object representing a physical manufactured product (or product to be manufactured). In a PLM system, a modeled object is thus defined by data suitable for the manufacturing of a physical object. These may typically be dimension values and/or tolerance values. For a correct manufacturing of an object, it is indeed better to have such values.

By CAE solution, it is additionally meant any solution, software of hardware, adapted for the analysis of the physical behavior of a modeled object. A well-known and widely used CAE technique is the Finite Element Model (FEM) which is equivalently referred to as CAE model hereinafter. An FEM typically involves a division of a modeled object into elements, i.e., a finite element mesh, which physical behaviors can be computed and simulated through equations. Such CAE solutions are provided by Dassault Systèmes under the trademark SIMULIA®. Another growing CAE technique involves the modeling and analysis of complex systems composed a plurality of components from different fields of physics without CAD geometry data. CAE solutions allow the simulation and thus the optimization, the improvement and the validation of products to manufacture. Such CAE solutions are provided by Dassault Systèmes under the trademark DYMOLA®. CAE may be used to ensure that various structural requirements (such as, but not limited to, mass, stiffness, strength, durability) are achieved by a new CAD model. Some of these requirements may be called Key Performance Indicators (KPIs). For many industrial products (for example cars, airplanes, consumer packaged goods, hi-tech), these KPIs are in conflict e.g. lower mass usually causes lower stiffness. Thus, optimization methods are often applied to find the best trade-off between the KPIs.

By CAM solution, it is meant any solution, software of hardware, adapted for managing the manufacturing data of a product. The manufacturing data generally include data related to the product to manufacture, the manufacturing process and the required resources. A CAM solution is used to plan and optimize the whole manufacturing process of a product. For instance, it may provide the CAM users with information on the feasibility, the duration of a manufacturing process or the number of resources, such as specific robots, that may be used at a specific step of the manufacturing process; and thus allowing decision on management or required investment. CAM is a subsequent process after a CAD process and potential CAE process. For example, a CAM solution may provide the information regarding machining parameters, or molding parameters coherent with a provided extrusion feature in a CAD model. Such CAM solutions are provided by Dassault Systèmes under the trademarks CATIA, Solidworks or trademark DELMIA®.

CAD and CAM solutions are therefore tightly related. Indeed, a CAD solution focuses on the design of a product or part and CAM solution focuses on how to make it. Designing a CAD model is a first step towards a computer-aided manufacturing. Indeed, CAD solutions provide key functionalities, such as feature based modeling and boundary representation (B-Rep), to reduce the risk of errors and the loss of precision during the manufacturing process handled with a CAM solution. Indeed, a CAD model is intended to be manufactured. Therefore, it is a virtual twin, also called digital twin, of an object to be manufactured with two objectives:

- checking the correct behavior of the object to be manufactured in a specific environment; and
- ensuring the manufacturability of the object to be manufactured.

PDM stands for Product Data Management. By PDM solution, it is meant any solution, software of hardware, adapted for managing all types of data related to a particular product. A PDM solution may be used by all actors involved in the lifecycle of a product: primarily engineers but also including project managers, finance people, sales people and buyers. A PDM solution is generally based on a product-oriented database. It allows the actors to share consistent data on their products and therefore prevents actors from using divergent data. Such PDM solutions are provided by Dassault Systèmes under the trademark ENOVIA®.

The modeled object taken as input by the method is a 2D/3D discrete geometrical representation of a manufacturing product/mechanical product/mechanical part The discrete geometrical representation is a data structure which comprises a discrete set of pieces of data. Each piece of data may specify an element of the product/mechanical part and be referred to as a discrete element. The discrete geometrical representation may be 3D or alternatively 2D. Yet alternatively, the discrete geometrical representation may be both 3D and 2D, *i.e.* may comprise a 3D portion which is a 3D discrete geometrical representation and a 2D portion which is a discrete geometrical representation, such as a hybrid 3D-2D meshing (e.g. for modeling a product comprising both thin parts, modeled with the 2D portions, and thick parts, modeled with the 3D portions). The discrete geometrical representation may in examples comprise a number of such pieces of data higher than 100, 1000, or 10000.

In case of a 3D discrete geometrical representation, the 3D discrete geometrical representation may be a solid/volume 3D discrete geometrical representation of the product/mechanical part, such as a solid 3D finite element model (FEM) or a 3D volume mesh (e.g. a 3D tetrahedral mesh). In such a case, each piece of data may represent a respective geometrical entity positioned in a 3D space such that the pieces of data form a solid representation of the mechanical part/product (i.e., "solid 3D discrete geometrical representation"). Each geometrical entity may represent a respective location (i.e., a material point) of the 3D object (in other words, a respective portion of material constitutive of a solid represented by the 3D object). The aggregation (i.e., union or juxtaposition) of the geometrical entities represents altogether the 3D object as a solid/volume. The 3D discrete geometrical representation may alternatively be a skin 3D discrete geometrical representation, representing a skin of the product/mechanical part, such as a 3D surface mesh (e.g. a triangular surface mesh) or a tessellation. In such a case, each piece of data may represent a respective geometrical entity positioned in a 3D space, such that the pieces of data form a representation of the mechanical product's skin (i.e., "skin 3D discrete geometrical representation"). In such a case, each geometrical entity represents a respective location (i.e., a material point) on an outer surface of the 3D object (in other words, a respective portion of outer surface of the volume occupied by material constitutive of a solid represented by the object). The aggregation (i.e., union or juxtaposition) of the geometrical entities represents altogether at least part of the outer surface of the object.

In the case of a 2D discrete geometrical representation, each piece of data may represent a respective geometrical entity positioned in a 2D space. The 2D discrete geometrical representation may be a 2D finite element mesh or any 2D mesh. The discrete geometrical representation may be associated with one or more thickness value(s), for example a distribution of thickness value over its finite elements. Such a 2D discrete geometrical representation may for example represent a generally planar product, such as a stamping part (e.g., with a constant thickness value) or a composite material part (e.g., with different thickness values).

The discrete geometrical representation may be a CAE model, also referred to as "finite element model (FEM)". The CAE model may stem from a CAD model representing the mechanical part/product, *e.g.* the method comprises at an initial stage obtaining the CAE model from the CAD model, for example using a meshing (*e.g.* triangulation) process. Conversely, a CAE model may be converted into a CAD model. The method may design/output a CAE model which may be then converted into a corresponding CAD model. The method may comprise, or may be included in wider process that comprises, or may form a solution to, (*e.g.* automatically) converting the CAE model designed/outputted by the method into a CAD model, by using any known (*e.g.* automatic) CAE to CAD conversion process that converts a CAE model into a CAD model.

The modeled object outputted by the method may be a CAD model, for example comprising or consisting in a feature tree and/or a B-rep. Such a model may stem from a CAE model and may results from a CAE to CAD conversion process, that the method may form or be part of as discussed.

The CAD model is feature-based (it comprises a feature tree, and optionally a corresponding B-rep obtained by executing the feature tree). A feature-based 3D model allows (*e.g.* during the determination of a manufacturing file or CAM file as discussed hereinafter) the detection and an automatic resolution of a geometry error in a CAD model such as a clash that will affect the manufacturing process. A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

As another example, a feature-based 3D model allows (*e.g.* during the determination of a manufacturing file or CAM file as discussed hereinafter) an automatic creation of a toolpath for a machine via a computer numerical control (CNC). With CNC, each object to be manufactured gets a custom computer program, stored in and executed by the machine control unit, a microcomputer attached to the machine. The program contains the instructions and parameters the machine tool will follow. Mills, lathes, routers, grinders and lasers are examples of common machine tools whose operations can be automated with CNC.

A key characteristic of a CAD model is that it may be designed exactly and unambiguously by chaining a small number of high-level parameterized design operations (including for example, but to limited to, sketch, extrusion, chamfer) and edited by modifying its high-level parameters. That this is a key distinction with the polyhedral representations such as a triangular surface mesh which may represent any 3D shape but do not provide modification or parameterization capabilities required in an industrial design context.

As CAD model is a parameterized model of a part/product, it is lighter in terms of memory footprint than other models such as a CAE model. Indeed, instead of storing a collection of discrete geometrical elements such as finite elements, a CAD model allows the storing of a list of features and parameters, which is lighter in terms of storage and memory footprint. Working on CAD models thus reduced memory requirements for the underlying systems, as compared for example to CAE models, in addition to facilitate editability of the model. This amounts to say that a CAE to CAD conversion process in fact compresses the CAE model into a CAD model which is lighter in terms of memory requirements (e.g. footprint), in addition to transforming the CAE model into a more easily editable CAD model.

The generation of a custom computer program from CAD files may be automated. Such generation may therefore be errorproof and may ensure a perfect reproduction of the CAD model to a manufactured product. CNC is considered to provide more precision, complexity and repeatability than is possible with manual machining. Other benefits include greater accuracy, speed and flexibility, as well as capabilities such as contour machining, which allows milling of contoured shapes, including those produced in 3D designs.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The method may be included in a production process, which may comprise, after performing the method, producing a physical product corresponding to the modeled object outputted by the method. The production process may comprise the following steps:

- (*e.g.* automatically) applying the method, thereby obtaining the CAD model or CAE model outputted by the method;
- using the obtained CAD model for manufacturing the part/product.

Using a CAD model for manufacturing designates any real-world action or series of action that is/are involved in/participate to the manufacturing of the product/part represented by the CAD model. Using the CAD model for manufacturing may for example comprise one or more of the following steps:

- editing the obtained CAD model;
- performing simulation(s) based on the CAD model or on a corresponding CAE model (*e.g.* the CAE model from which the CAD model stems, after a CAE to CAD conversion process), such as simulations for validation of mechanical, use and/or manufacturing properties and/or constraints (*e.g.* structural simulations, thermodynamics simulation, aerodynamic simulations);
- editing the CAD model based on the results of the simulation(s);
- optionally (*i.e.* depending on the manufacturing process used, the production of the mechanical product may or may not comprise this step), (*e.g.* automatically) determining a manufacturing file/CAM file (*e.g.* comprising manufacturing instructions for manufacturing the product represented by the CAD model and/or control instructions for the manufacturing process and/or for commanding the manufacturing process or manufacturing tool(s) thereof) based on the (*e.g.* edited) CAD model (*e.g.* the control instructions stem from the CAD file storing the CAD model and/or specifications of the CAD model), for production/manufacturing of the manufacturing product;
- sending the CAD file and/or the manufacturing file/CAM file to a factory in view of manufacturing the product represented by the CAD model; and/or
- (*e.g.* automatically) producing/manufacturing, based on the determined manufacturing file/CAM file or on the CAD model, the mechanical product originally represented by the model outputted by the method. This may include feeding (*e.g.* automatically) the manufacturing file/CAM file and/or the CAD file to the machine(s) performing the manufacturing process.

This last step of production/manufacturing may be referred to as the manufacturing step or production step. This step manufactures/fabricates the part/product based on the CAD model and/or the CAM file, *e.g.* upon the CAD model and/or CAD file being fed to one or more manufacturing machine(s) or computer system(s) controlling the machine(s). The manufacturing step may comprise performing any known manufacturing process or series of manufacturing processes, for example one or more additive manufacturing steps, one or more cutting steps (e.g. laser cutting or plasma cutting steps), one or more stamping steps, one or more forging steps, one or more bending steps, one or more deep drawing steps, one or more molding steps, one or more machining steps (e.g. milling steps) and/or one or more punching steps. Because the design method improves the design of a model (CAE or CAD) representing the part/product, the manufacturing and its productivity are also improved.

Editing the CAD model may comprise, by a user *(i.e.* a designer), performing one or more editions of the CAD model, *e.g.* by using a CAD solution. The modifications of the CAD model may include one or more modifications each of a geometry and/or of a parameter of the CAD model. The modifications may include any modification or series of modifications performed on a feature tree of the model (*e.g.* modification of feature parameters and/or specifications) and/or modifications performed on a displayed representation of the CAD model (*e.g.* a B-rep). The modifications are modifications which maintain the technical functionalities of the part/product, *i.e.* the user performs modifications which may affect the geometry and/or parameters of the model but only with the purpose of making the CAD model technically more compliant with the downstream use and/or manufacturing of the part/product. Such modifications may include any modification or series of modification that make the CAD model technically compliant with specifications of the machine(s) used in the downstream manufacturing process. Such modifications may additionally or alternatively include any modification or series of modification that make the CAD model technically compliant with a further use of the product/part once manufactured, such modification or series of modifications being for example based on results of the simulation(s).

The CAM file may comprise a manufacturing set up model obtained from the CAD model. The manufacturing set up may comprise all data required for manufacturing the mechanical product (*e.g.* control instructions for controlling the manufacturing process) so that it has a geometry and/or a distribution of material that corresponds to what is captured by the CAD model, possibly up to manufacturing tolerance errors. Determining the production file may comprise applying any CAM (Computer-Aided Manufacturing) or CAD-to-CAM solution for (*e.g.* automatically) determining a production file from the CAD model (*e.g.* any automated CAD-to-CAM conversion algorithm). Such CAM or CAD-to-CAM solutions may include one or more of the following software solutions, which enable automatic generation of manufacturing instructions and tool paths for a given manufacturing process based on a CAD model of the product to manufacture:

- Fusion 360,
- FreeCAD,
- CATIA,
- SOLIDWORKS,
- The NC Shop Floor programmer of Dassault Systèmes illustrated on https://my.3dexperience.3ds.com/welcome/fr/compass-world/rootroles/nc-shop-floor-programmer,
- The NC Mill-Turn Machine Programmer of Dassault Systèmes illustrated on https://my.3dexperience.3ds.com/welcome/fr/compass-world/rootroles/nc-mill-turn-machine-programmer, and/or
- The Powder Bed Machine Programmer of Dassault Systèmes illustrated on https://my.3dexperience.3ds.com/welcome/fr/compass-world/rootroles/powder-bed-machine-programmer.

The product/part may be an additive manufacturable part, *i.e.* a part to be manufactured by additive manufacturing (*i.e.* 3D printing). In this case, the production process does not comprise the step of determining the CAM file and directly proceeds to the producing/manufacturing step, by directly (*e.g.* and automatically) feeding a 3D printer with the CAD model. 3D printers are configured for, upon being fed with a CAD model representing a mechanical product (*e.g.* and upon launching, by a 3D printer operator, the 3D printing), directly and automatically 3D print the mechanical product in accordance with the CAD model. In other words, the 3D printer receive the CAD model, which is (*e.g.* automatically) fed to it, reads (*e.g.* automatically) the CAD model, and prints (*e.g.* automatically) the part by adding together material, *e.g.* layer by layer, to reproduce the geometry and/or distribution of material captured by the CAD model. The 3D printer adds the material to thereby reproduce exactly in reality the geometry and/or distribution of material captured by the CAD model, up to the resolution of the 3D printer, and optionally with or without tolerance errors and/or manufacturing corrections. The manufacturing may comprise, *e.g.* by a user (*e.g.* an operator of the 3D printer) or automatically (by the 3D printer or a computer system controlling it), determining such manufacturing corrections and/or tolerance errors, for example by modifying the CAD file to match specifications of the 3D printer. The production process may additionally or alternatively comprise determining (*e.g.* automatically by the 3D printer or a computer system controlling it) from the CAD model, a printing direction, for example to minimize overhang volume (as described in European patent No. 3327593, which is incorporated herein by reference), a layer-slicing (i.e., determining thickness of each layer, and layer-wise paths/trajectories and other characteristics for the 3D printer head (e.g., for a laser beam, for example the path, speed, intensity/temperature, and other parameters).

The product/part may alternatively be a machined part (*i.e.* a part manufactured by machining), such as a milled part (*i.e.* a part manufactured by milling). In such a case, the production process may comprise a step of determining the CAM file. This step may be carried out automatically, by any suitable CAM solution to automatically obtain a CAM file from a CAD model of a machined part. The determination of the CAM file may comprise (*e.g.* automatically) checking if the CAD model has any geometric particularity (*e.g.* error or artefact) that may affect the production process and (*e.g.* automatically) correcting such particularities. For example, machining or milling based on the CAD model may not be carried out if the CAD model still comprises sharp edges (because the machining or milling tool cannot create sharp edges), and in such a case the determination of the CAM file may comprise (*e.g.* automatically) rounding or filleting such sharp edges (*e.g.* with a round or fillet radius that corresponds, *e.g.* substantially equals up to a tolerance error, the radius of the cutting head of the machining tool), so that machining or milling based on the CAD model can be done. More generally, the determination of the CAM file may automatically comprise rounding or filleting geometries within the CAD model that are incompatible with the radius of the machining or milling tool, to enable machining/milling. This check and possible corrections (*e.g.* rounding or filleting of geometries) may be carried out automatically as previously discussed, but also, by a user (*e.g.* a machining engineer), which performs the correction by hand on a CAD and/or CAM solution, *e.g.* the solution constraining the user to perform corrections that make the CAD model compliant with specifications of the tool used in the machining process.

Further to the check, the determination of the CAM file may comprise (*e.g.* automatically) determining the machining or milling path, i.e. the path to be taken by the machining tool to machine the product. The path may comprise a set of coordinates and/or a parameterized trajectory to be followed by the machining tool for machining, and determining the path may comprise (*e.g.* automatically) computing these coordinates and/or trajectory based on the CAD model. This computation may be based on the computation of a boundary of a Minkowski subtraction of the CAD model by a CAD model representation of the machining tool, as for example discussed in European Patent Application EP21306754.9 filed on 13 December 2021 by Dassault Systèmes, and which is incorporated herein by reference. It is to be understood that the path may be a single path, *e.g.* that the tool continuously follows without breaking contact with the material to be cut. Alternatively, the path may be a concatenation of a sequence sub-paths to be followed in a certain order by the tool, *e.g.* each being continuously followed by the tool without breaking contact with the material to be cut. Optionally, the determination of the CAM file may then comprise (*e.g.* automatically) setting machine parameters, including cutting speed, cut/pierce height, and/or mold opening stroke, for example based on the determined path and on the specification of the machine. Optionally, the determination of the CAM file may then comprise (*e.g.* automatically) configuring nesting where the CAM solution decides the best orientation for a part to maximize machining efficiency.

In this case of a machining or milling part, the determining of the CAM file thus results in, and outputs, the CAM file comprising a machining path, and optionally the set machine parameters and/or specifications of the configured nesting. This outputted CAM file may be then (*e.g.* directly and automatically) fed to the machining tool and/or the machining tool may then (*e.g.* directly and automatically) be programmed by reading the file, upon which the production process comprises the producing/manufacturing step where the machine performs the machining of the product according to the production file, *e.g.* by directly and automatically executing the production file. The machining process comprises the machining tool cutting a real-world block of material to reproduce the geometry and/or distribution of material captured by the CAD model, *e.g.* up to a tolerance error (*e.g.* tens of microns for milling).

The product/part may alternatively be a molded part, *i.e.* a part manufactured by molding (*e.g.* injection-molding). In such a case, the production process may comprise the step of determining the CAM file. This step may be carried out automatically, by any suitable CAM solution to automatically obtain a CAM file from a CAD model of a molded part. The determining of the CAM file may comprise (e.g. automatically) performing a sequence of molding checks based on the CAD model to check that the geometry and/or distribution of material captured by the CAD model is adapted for molding, and (*e.g.* automatically) performing the appropriate corrections if the CAD model is not adapted for molding. Performing the checks and the appropriate corrections (if any) may be carried out automatically, or, alternatively, by a user (*e.g.* a molding engineer), for example using a CAD and/or CAM solution that allows a user to perform the appropriate corrections on the CAD model but constraints him/her corrections that make the CAD model compliant with specifications of the molding tool(s). The checks may include: verifying that the virtual product as represented by the CAD model is consistent with the dimensions of the mold and/or verifying that the CAD model comprises all the draft angles required for demolding the product, as known *per se* from molding. The determining of the CAM file may then further comprise determining, based on the CAD model, a quantity of liquid material to be used for molding, and/or a time to let the liquid material harden/set inside the mold, and outputting a CAM file comprising these parameters. The production process then comprises (*e.g.* automatically) performing the molding based on the outputted file, where the mold shapes, for the determined hardening time, a liquid material into a shape that corresponds to the geometry and/or distribution of material captured by the CAD model, *e.g.* up to a tolerance error (*e.g.* up to the incorporation of draft angles or to the modification of draft angles, for demolding).

The product/part may alternatively be a stamped part, also possibly referred to as "stamping part", *i.e.* a part to be manufactured in a stamping process. The production process may in this case comprise (*e.g.* automatically) determining a CAM file based on the CAD model. The CAD model represents the stamping part, *e.g.* possible with one or more flanges if the part is to comprise some, and possibly in this latter case with extra material to be removed so as to form an unfolded state of one or more flanges of the part, as known *per se* from stamping. The CAD model thus comprises a portion that represents the part without the flanges (which is the whole part in some cases) and possibly an outer extra patch portion that represents the flanges (if any), with possibly the extra material (if any). This extra patch portion may present a g2-continuity over a certain length and then a g1-continuity over a certain length.

The determination of the CAM file may in this stamping case comprise (*e.g.* automatically) determining parameters of the stamping machine, for example a size of a stamping die or punch and/or a stamping force, based on the geometry and/or distribution of material of the virtual product as captured by the CAD model. If the CAD model also comprises the representation of the extra material to be removed so as to form an unfolded state of one or more flanges of the part, the extra material to be removed may for example be cut by machining, and determining the CAM file may also comprise determining a corresponding machining CAM file, *e.g.* as discussed previously. If there are one or more flanges, determining the CAM file may comprise determining geometrical specifications of the g2-continuity and g1-continuity portions that allow, after the stamping itself and the removal of the extra material, to fold in a folding process the flanges towards an inner surface of the stamped part and along the g2-continuity length. The CAM file thereby determined may thus comprise: parameters of the stamping tool, optionally said specifications for folding the flanges (if any), and optionally a machining production file for removing the extra material (if any).

The stamping production process may then output, *e.g.* directly and automatically, the CAM file, and perform the stamping process (*e.g.* automatically) based on the file. The stamping process may comprise stamping (*e.g.* punching) a portion of material to form the product as represented by the CAD file, that is possibly with the unfolded flanges and the extra material (if any). Where appropriate, the stamping process may then comprise cutting the extra material based on the machining production file and folding the flanges based on said specifications for folding the flanges, thereby folding the flanges on their g2-continuity length and giving a smooth aspect to the outer boundary of the part. In this latter case, the shape of the part once manufactured differ from its virtual counterpart as represented by the CAD model in that the extra material is removed and the flanges are folded, whereas the CAD model represents the part with the extra material and the flanges in an unfolded state.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 5 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1.  A computer-implemented method for generating a CAD feature tree from a discrete geometrical representation of a mechanical part, the method comprising:

    - providing:

      ∘ the discrete geometrical representation, wherein the discrete geometrical representation stems from a scan of the mechanical part, and
      ∘ a set of CAD features;

    - optimizing an objective function which:

      ∘ rewards a fitting of the discrete geometrical representation by a candidate sequence of CAD features, and
      ∘ penalizes a complexity of the candidate sequence, the complexity of the candidate sequence being a function of the candidate sequence that increases when adding a feature to the candidate sequence,

    the optimization comprising determining one or more sequences of CAD features from the set of CAD features, the determining of the one or more sequences of CAD features comprising:

      ∘ performing a depth-first search in a tree of candidate sequences of CAD features, the depth-first search being based on rewarding a fitting of the discrete geometrical representation by a candidate sequence and penalizing a complexity of a candidate sequence,

    wherein the performing of the depth-first search comprises one or more iterations of:

      - selecting, among partial candidate sequences of the tree resulting from the previous iterations, a partial candidate sequence having a best selection score, the selection score of a partial sequence being a score that:

        ∘ rewards the fitting of the discrete geometrical representation by the partial sequence,
        ∘ penalizes the complexity of the partial sequence, and
        ∘ rewards an expected maximal fitting of a parent of the partial sequence, the expected maximal fitting of a parent of the partial sequence being based on a known maximal fitting of children of the partial sequence;

      - iteratively adding CAD features to the selected partial candidate sequence based on a greedy score, the greedy score of a partial sequence being a score that:

        ∘ rewards the fitting of the discrete geometrical representation by the partial sequence;
        ∘ penalizes the complexity of the partial sequence, and
        ∘ rewards a fitting upper bound of the discrete geometrical representation by the partial sequence,

    thereby obtaining a candidate sequence of CAD features;

      - adding, to the partial candidate sequences of the tree, all partial candidate sequences considered in the iteratively adding of the CAD features and which have not yielded the obtained candidate sequence of CAD features;

- for each partial sequence of the obtained candidate sequence, updating the maximal fitting of children of the partial sequence, and increasing a number of times where a child of the partial sequence has been selected based on the selection score; and

- pruning each candidate sequence of the tree having a pruning score smaller than a best value of the objective function among all obtained candidate sequences, the pruning score of a candidate sequence being a score that:

       ◦ rewards the fitting upper bound of the discrete geometrical representation by the candidate sequence, and

       ◦ penalizes the complexity of the candidate sequence.

2. The method of claim 1, wherein the selection score of a sequence s is of the type:

$$u(s) = decay(s) * \left( \mathcal{A}_M(T(s)) + \left( 1 - \mathcal{A}_M\big(T(s)\big) \right) * \mathcal{A}_M^{expected}(s) - \alpha \mathcal{C}_M(s) \right)$$

where:

    ◦ $decay(s) = \theta^{n(s)}$ with $\theta$ a constant, $n(s)$ being the number of times where a child of the parent of $s$ has been selected based on the selection score,

    ◦ $\mathcal{A}_M(T(s))$ is the fitting of the discrete geometrical representation by the sequence $s$, $T(s)$ being a CAD feature tree resulting from the candidate sequence s,

    ◦

$$\mathcal{A}_M^{expected}(s)$$

is the expected maximal fitting of the parent of the sequence $s$,

    ◦ $\mathcal{C}_M(s)$ is the complexity of the sequence $s$, and

    ◦ $\alpha$ is a constant.

3. The method of claim 2, wherein:

$$\mathcal{A}_M^{expected}(s) = \gamma^{n(s)} * \tilde{\mathcal{A}}_M(s) + \left( 1 - \gamma^{n(s)} \right) * \mathcal{A}_M^{max}(s)$$

where:

    ◦ $\gamma$ is a constant,

    ◦ $\tilde{\mathcal{A}}_M(s)$ is the fitting upper bound of $s$, and

    ◦

$$\mathcal{A}_M^{max}(s)$$

is the maximal fitting of children of a parent of $s$.

4. The method of any one of claims 1 to 3, wherein the greedy score of a sequence $s$ is of the type:

$$r(s) = \tilde{\mathcal{A}}_M(s) + \beta \mathcal{A}_M(T(s)) - \alpha \mathcal{C}_M(s)$$

where:

- ◦ $\tilde{\mathcal{A}}_M(s)$ is the fitting upper bound of $s$,

- ◦ $\mathcal{A}_M(T(s))$ is the fitting of the discrete geometrical representation by the sequence s, $T(s)$ being a CAD feature tree resulting from the candidate sequence $s$,

- ◦ $\mathcal{C}_M(s)$ is the complexity of the sequence $s$, and
- ◦ $\alpha$ and $\beta$ are constants.

5. The method of any one of claims 1 to 4, wherein the pruning score of a sequence $s$ is of the type:

$$h(s) = \tilde{\mathcal{A}}_M(s) - \alpha \mathcal{C}_M(s)$$

where:

- ◦ $\tilde{\mathcal{A}}_M(s)$ is the fitting upper bound of $s$,

- ◦ $\mathcal{C}_M(s)$ is the complexity of the sequence $s$, and
- ◦ $\alpha$ is a constant.

6. The method of any one of claims 1 to 5, wherein the objective function comprises a subtraction of the complexity of a candidate sequence by a term rewarding a fitting of the discrete geometrical representation by the candidate sequence.

7. The method of claim 6, wherein the term rewarding a fitting is weighted by a weighting parameter.

8. The method of any of claims 6 to 7, wherein the objective function is of the type:

$$\mathcal{J}(s) = \alpha \mathcal{C}_M(s) - \mathcal{A}_M\big(T(s)\big)$$

where $s$ is the candidate sequence, $\mathcal{J}(s)$ is the objective function, $\mathcal{C}_M$ is the complexity of the candidate sequence and $\mathcal{A}_M(T(s))$ is the term rewarding the fitting, $\alpha$ is a weighting parameter, and $T(s)$ is a CAD feature tree resulting from the candidate sequence s.

9. The method of any of claims 1 to 8, wherein the optimization of the objective function is under a constraint that each of the determined one or more sequences has a fitting of the discrete geometrical representation that is larger than a fitting threshold.

10. The method of any of claims 1 to 9, wherein the rewarding of a fitting is based on a ratio between a surface area of a covering of the discrete geometrical representation by the candidate sequence, and a surface area of the discrete geometrical representation.

11. The method of any of claims 1 to 10, wherein the complexity is of the type

$$\mathcal{C}_M(f_1, \cdots, f_n) = \frac{1}{M}\left( \left( \sum_{i=1}^{n} |\partial f_i \cap M| \right) - |\partial T(f_1, \cdots, f_n)_+ \cap M| \right)$$

where $C_M$ is the complexity of a sequence $s$ of CAD features $(f_1, \cdots, f_n)$. $\partial T(f_1, \cdots, f_n)_+$ is a boundary of a feature resulting from the sequence $s$, $n$ is the number of CAD features in the sequence s, $\partial f_i$ is a boundary of the CAD feature $f_i$, $\partial f_i \cap M$ is an intersection between the boundary $\partial f_i$ and the discrete geometrical representation $M$, and the function $|N|$ outputs the surface area of the argument $N$.

12. A computer program comprising instructions which, when executed on a computer, cause the computer to perform the method of any one of claims 1 to 11.

13. A computer-readable data storage medium having recorded thereon the computer program of claim 12.

14. A computer system comprising a processor coupled to a memory, the memory having recorded thereon the computer program of claim 12.

FIG. 1

FIG. 2

## FIG. 3

Explorable node

Node selected during rollout

Already explored node

FIG. 4

FIG. 5

**EUROPEAN SEARCH REPORT**

Application Number

EP 24 21 0020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/418986 A1 (BRIFAULT LUCAS [FR] ET AL) 28 December 2023 (2023-12-28)<br>* claims 1-7 *<br>* paragraphs [0137], [0149] *<br>* the whole document * | 1-14 | INV.<br>G06F30/17<br>G06N5/01<br><br>ADD.<br>G06F111/06 |
| A | Anonymous: "Depth-first search - Wikipedia",<br>,<br>27 January 2024 (2024-01-27), XP093249669,<br>Retrieved from the Internet:<br>URL:https://en.wikipedia.org/w/index.php?title=Depth-first_search&oldid=1199710840<br>* abstract *<br>* the whole document * | 1 | |
| A | Anonymous: "Greedy algorithm - Wikipedia",<br>,<br>6 March 2024 (2024-03-06), XP093249672,<br>Retrieved from the Internet:<br>URL:https://en.wikipedia.org/w/index.php?title=Greedy_algorithm&oldid=1212155202<br>* abstract *<br>* the whole document * | 1 | TECHNICAL FIELDS SEARCHED (IPC)<br><br>G06F<br>G06N |

-/--

The present search report has been drawn up for all claims

| Place of search | Date of completion of the search | Examiner |
|---|---|---|
| Munich | 13 February 2025 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 21 0020

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FAYOLLE PIERRE-ALAIN ET AL: "An evolutionary approach to the extraction of object construction trees from 3D point clouds", COMPUTER-AIDED DESIGN, ELSEVIER PUBLISHERS BV., BARKING, GB, vol. 74, 21 January 2016 (2016-01-21), pages 1-17, XP029424888, ISSN: 0010-4485, DOI: 10.1016/J.CAD.2016.01.001 * abstract * * section 6.4 * * section 5.1; section 5.3 par.1 and 3 * * page 8, paragraph 3 * * page 8, last paragraph * * page 1, paragraph 2 * * page 4, paragraph 2 * * section 6.6 par.1 * * equation (7) * * section 6.5 par.3 * * the whole document * ----- | 1-14 | |
| A | Q Wu ET AL: "Constructing 3D CSG Models from 3D Raw Point Clouds", Computer Graphics Forum, 1 August 2018 (2018-08-01), pages 221-232, XP055596703, Oxford DOI: 10.1111/cgf.13504 Retrieved from the Internet: URL:https://kevinkaixu.net/papers/wu_sgp18_csg.pdf * abstract; figures 2,9,13 * * the whole document * ----- | 1-14 | TECHNICAL FIELDS SEARCHED (IPC) |

The present search report has been drawn up for all claims

| Place of search | Date of completion of the search | Examiner |
|---|---|---|
| Munich | 13 February 2025 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 0020

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | | Publication date |
|---|---|---|---|---|
| US 2023418986 A1 | 28-12-2023 | CN | 117313256 A | 29-12-2023 |
| | | EP | 4300344 A1 | 03-01-2024 |
| | | JP | 2024003784 A | 15-01-2024 |
| | | US | 2023418986 A1 | 28-12-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 21305673
- EP 21306184
- EP 21305763
- EP 23306189
- EP 22305934
- EP 3327593 A
- EP 21306754